**Europäisches Patentamt**

(19) **European Patent Office**

**Office européen des brevets**

(11) Numéro de publication: **0 027 408 B1**

(12) **FASCICULE DE BREVET EUROPEEN**

(45) Date de publication du fascicule du brevet:
30.11.83

(21) Numéro de dépôt: **80401414.0**

(22) Date de dépôt: **03.10.80**

(51) Int. Cl.³: **G 05 D 13/04, H 02 K 11/00**

(54) Dispositif de déclenchement à masselottes.

(30) Priorité: **12.10.79 FR 7925737**

(43) Date de publication de la demande:
**22.04.81 Bulletin 81/16**

(45) Mention de la délivrance du brevet:
**30.11.83 Bulletin 83/48**

(84) Etats contractants désignés:
**DE FR GB SE**

(56) Documents cités:
**GB - A - 713 944**
**GB - A - 952 418**
**US - A - 2 836 670**
**US - A - 2 872 540**
**US - A - 2 938 975**

**PRODUCT ENGINEERING, vol. 34, no. 6, 18 mars 1963,
NEW YORK (US) B.A. BUGGS: "Choosing a Speed
Governor", pages 78-88**

**Le dossier contient des informations techniques
présentées postérieurement au dépôt de la demande et
ne figurant pas dans le présent fascicule.**

(73) Titulaire: **SOCIETE NATIONALE D'ETUDE ET DE
CONSTRUCTION DE MOTEURS D'AVIATION,
"S.N.E.C.M.A.", 2 Boulevard Victor, F-75015 Paris (FR)**

(72) Inventeur: **Silhouette, Jean-Max Marie, 54, boulevard
Aristide Briand, F-77000 Melun (FR)**

(74) Mandataire: **Moinat, François et al, S.N.E.C.M.A. Service
des Brevets Boîte Postale 81, F-91003 Evry Cedex (FR)**

BUNDESDRUCKEREI BERLIN

## Dispositif de déclenchement à masselottes

L'invention concerne un dispositif de déclenchement à masselottes du type dans lequel un arbre d'entrée entraîne en rotation des masselottes qui transforment la force centrifuge à laquelle elles sont soumises en un effort tendant à déplacer un organe mobile le long de l'axe du dispositif, de façon à déclencher un système de commande tel qu'un interrupteur électrique, ou qu'une valve hydraulique ou pneumatique lorsque la vitesse de rotation de l'arbre d'entrée dépasse un seuil prédéterminé.

Des dispositifs de déclenchement à masselottes de ce type sont fréquemment utilisés pour réaliser une régulation de vitesse ou un asservissement. Ainsi, les régulateurs à boules de Watt et les asservissements des turboréacteurs les plus récents sont de ce type.

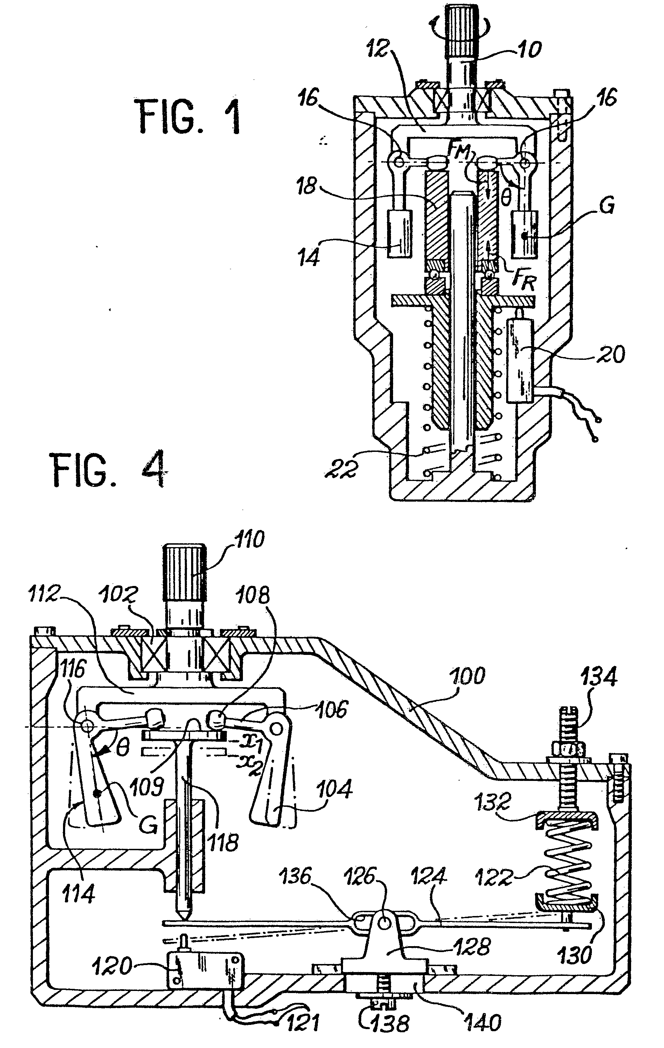

Afin de faire apparaître le problème résolu par la présente invention, on a représenté à titre d'exemple sur la figure 1 des dessins annexés, une vue en coupe longitudinale schématique d'un dispositif de déclenchement classique à masselottes. Dans ce dispositif, un arbre d'entrée 10 entraîne en rotation un plateau 12 portant des masselottes 14 circonférentiellement espacées et susceptibles de pivoter autour d'axes 16 tangents au bord périphérique du plateau 12, de façon à solliciter un organe mobile 18 vers un système de commande tel qu'un interrupteur électrique 20, à l'encontre d'un ressort de type connu dit »spirale« 22. L'organe mobile 18 est donc soumis à deux forces antagonistes qui sont, d'une part, la force $F_M$ exercée par les masselottes et, d'autre part, la force $F_R$ exercée par le ressort. Le GB-A-952 418 décrit un régulateur de vitesse comportant un dispositif de ce type.

Si la raideur $dF_R/dx$ du ressort 22, c'est-à-dire la variation de la force $F_R$ en fonction du déplacement x de l'organe mobile 18, peut être considérée comme constante et toujours positive, il n'en va pas de même de la variation de la force $F_M$ en fonction de déplacement x, c'est-à-dire de la raideur $dF_M/dx$ des masselottes.

Quelle que soit leur application, les dispositifs de déclenchement à masselottes du type défini précédemment sont sensibles à un seuil de vitesse de rotation déterminé de l'arbre d'entrée pour déclencher un système de commande quelconque tel qu'un système électrique, hydraulique ou pneumatique. Quel que soit ce système, il est du type binaire, c'est-à-dire qu'il définit deux positions stables correspondant par exemple à l'ouverture et à la fermeture d'un interrupteur, d'un clapet ou de tout autre organe analogue. Il est donc nécessaire que le déclenchement du système soit franc, particulièrement lorsque la vitesse de rotation de l'arbre d'entrée est amenée à subir de légères fluctuations autour du seuil de déclenchement.

Afin d'augmenter la rapidité de réponse du dispositif, la plupart des systèmes connus existants sont tels que la force $F_M$ exercée par les masselottes 14 sur l'organe mobile 18 est choisie aussi grande que possible dans la zone de fonctionnement du dispositif.

Cependant et en dépit des apparences, cette solution n'est pas satisfaisante pour résoudre le problème posé par le déclenchement franc du système de commande 20. Afin d'en expliciter les raisons, on se référera à la figure 2 des dessins annexés qui représente les variations des forces antagonistes $F_R$ et $F_M$ appliquées sur l'organe entre les deux positions extrêmes x1 et x2 qu'il est susceptible d'occuper. Sur cette figure, la force $F_M$ est représentée pour différentes valeurs ($N_1$, $N_2$, etc . . .) de la vitesse de rotation de l'arbre d'entrée 10, lorsque la zone de fonctionnement des masselottes 14 est du type connu dans les dispositifs antérieurs. Comme l'illustre la figure 2, la raideur $dF_M/dx$ du système de masselottes 14 est alors inférieure en tout point à la raideur $dF_R/dx$ du ressort 22. Une analyse détaillée du fonctionnement d'un dispositif à masselottes présentant ces caractéristiques conduit aux observations suivantes.

Lorsque l'arbre 10 ne tourne pas, la force $F_M$ est nulle et l'organe mobile 18 occupe la position $x_1$ sous l'action de la force $F_R$ exercée par le ressort 22. Le point représentatif de l'équilibre de l'organe 18 est alors le point A sur la figure 2. Lorsque l'arbre 10 tourne à une vitesse N qui va en augmentant, la courbe $F_M$ représentative de la force exercée par les masselottes 14 à l'encontre de la force exercée par le ressort 22 se déplace vers le haut en considérant la figure 2, de telle sorte que le point représentatif de l'équilibre de l'organe 18 se déplace du point A vers le point B. Tant que la courbe $F_M$ reste en dessous du point B, ce point correspondant à la valeur de la force $F_R$ lorsque l'organe mobile est en $x_1$, cet organe reste donc immobile. Lorsque la force $F_M$ devient supérieure à la valeur de la force $F_R$ au point B, l'organe mobile 18 se déplace jusqu'à ce qu'un équilibre stable s'établisse entre les forces exercées par les masselottes 14 et par le ressort 22. Cet équilibre stable est déterminé par le point d'intersection entre les courbes $F_R$ et $F_M$. Le point d'équilibre de l'organe mobile se situe donc sur la courbe $F_R$ entre le point B et le point C, ce dernier correspondant à la valeur de la force $F_R$ lorsque l'organe mobile 18 est en $x_2$. Le système du commando 20 est alors déclenché. Lorsque la vitesse de rotation de l'arbre 10 continue à augmenter, la force $F_M$ devient prépondérante devant la force $F_R$, de telle sorte que l'organe mobile 18 reste en $x_2$. Au contraire, si la vitesse de rotation de l'arbre 10 subit des fluctuations lorsque le point d'équilibre du système se trouve voisin du point C, ou entre les points B et C, la courbe $F_M$ représentative de la force appliquée par les masselottes 14 sur l'organe mobile 18 peut descendre provisoirement d'une certaine valeur par rapport à la courbre $F_R$, de telle sorte que le point d'équilibre de l'organe mobile 18 se déplace vers le point B sur la courbe $F_R$. L'organe 18 se déplace donc en s'éloignant du système de commande à déclencher. Ceci a pour conséquence de provoquer plusieurs changements d'état du système 20 dans un laps de temps très court et une incertitude sur le déclenchement de ce système.

L'analyse qui précède montre que les dispositifs de déclenchement connus à masselottes ne permettent pas d'obtenir un déclenchement franc et précis du système à commander, mais au contraire un déclenchement incertain sensible à des variations passagères de la vitesse de rotation de l'arbre 10. Ce type de déclenchement n'est évidemment pas souhaitable car il conduit à la fois à une hésitation dans la commande et à une usure prématurée des contacts.

Le document »Product Engineering« vol. 34 n°6, 18 mars 1963, NEW YORK (US) B. A. BUGGS intitulé »Choosing a speed Governor« montre un exemple de réalisation utilisant pour obtenir un effet brusque un ressort plat à effet de claquage dont la raideur $dF_R/dx$ est discontinue. Dans ce cas, en dehors de ce point précis de discontinuite, la raideur du ressort est superieure à celle des masselottes et l'équilibre obtenu est stable.

En conséquence, l'invention a pour objet la réalisation d'un dispositif de déclenchement à masselottes dont la structure peut être sensiblement identique à la structure des dispositifs connus, mais dont les paramètres de fonctionnement sont choisis judicieusement de façon à assurer un déclenchement franc et brutal du système à commander, tout en éliminant tout élément de folucation délicate dont le réglage présente de serieuses difficultés.

A cet effet, et conformément à l'invention, il est proposé un dispositif de déclenchement à masselottes, la raideur des masselottes étan positive dans lequel un arbre d'entrée entraîne en rotation les masselottes qui transforment la force centrifuge à laquelle elles sont soumises en un effort tendant à déplacer un organe mobile le long de l'axe du dispositif à l'encontre de la force exercée par un ressort, de type spirale de façon à déclencher un système de commande lorsque la vitesse de rotation de l'arbre d'entrée dépasse un seuil prédéterminé, ce dispositif étant caractérisé en ce que la raideur du ressort, en valeur absolue est inférieure à la raideur des masselottes dans la position occupés par l'organe mobile au voisinage du déclenchement de l'organe de commande.

Afin de montrer qu'un dispositif à masselottes présentant ces caractéristiques permet bien d'obtenir un déclenchement franc du système de commande, on se référera à la figure 4 des dessins annexés, sur laquelle on a représenté les forces $F_R$ et $F_M$ appliquées respectivement par le ressort 22 et par les masselottes 14 à l'organe mobile 18 dans un dispositif de commande présentant des caractéristiques conformes à la présente invention, c'est-à-dire lorsque la raideur $dF_R/dx$ du ressort est inférieure à la raideur

$dF_M/dx$ des masselottes. Dès que la vitesse atteinte par l'arbre d'entrée 10 est telle que la valeur de la force $F_M$ en $x_1$ devient très légèrement supérieure à la valeur de la force $F_R$ en $x_1$, le point d'équilibre de l'organe 18 se déplace immédiatement de B' en C', c'est-à-dire que l'organe 18 vient occuper la position extrême $x_2$ dans laquelle il déclenche le système 20. En effet, on voit sur la figure 4 qu'à tout déplacement de l'organe 18 de $x_1$ vers $x_2$ correspond une augmentation de la différence entre la force $F_M$ et la force $F_R$. Ainsi, si la vitesse de rotation N de l'arbre d'entrée 10 est telle que la force $F_M$ exercée par les masselottes 14 est égale à la force $F_R$ exercée par le ressort lorsque l'organe 18 est en $x_1$, la force $F_M$ est supérieure d'une valeur $\Delta F$ à la force $F_R$ lorsque l'organe 18 est en $x_2$. Il en résulte qu'une variation de la vitesse de rotation de l'arbre 10 lorsque l'organe 18 est en $x_2$ n'a aucun effet sur cet organe tant que cette variation n'a pas pour conséquence une diminution de la force $F_M$ d'une valeur au moins égale à $\Delta F$. La valeur $\Delta F$ étant déterminée en choisissant les raideurs du système de masselottes 14 et du ressort 22 de façon appropriée le dispositif selon l'invention est donc parfaitement stable après déclenchement et permet un déclenchement franc du système de commande.

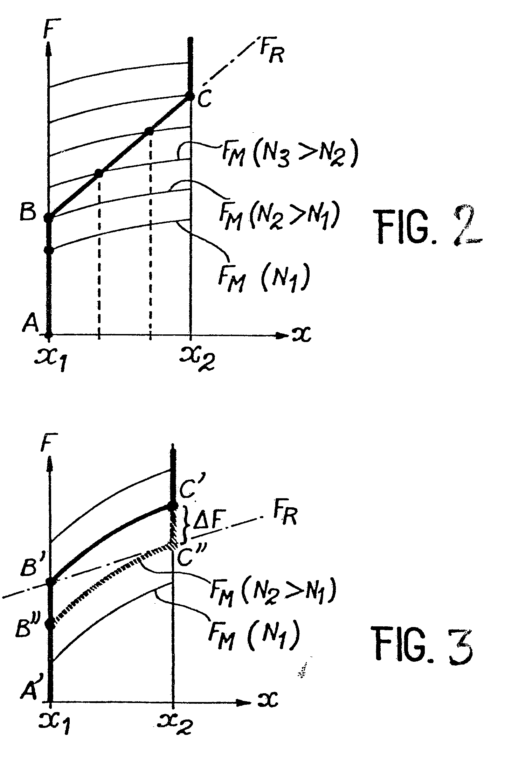

Lorsque la vitesse de rotation de l'arbre d'entrée 10 décroît, le déplacement de l'organe mobile 18 de $x_2$ en $x_1$ n'intervient que lorsque la force $F_M$ en $x_2$ devient légèrement inférieure à la force $F_R$ en $x_2$, c'est-à-dire en-dessous du point C''. L'organe mobile 18 se déplace alors brutalement de $x_2$ en $x_1$, étant donné qu'à tout déplacement de cet organe de $x_2$ vers $x_1$ correspond une augmentation de la différence entre les forces $F_R$ et $F_M$. Le point d'équilibre de l'organe 18 se trouve alors symbolisé en B'' sur le figure 3.

Dans le dispositif selon l'invention, la réponse de l'organe mobile 18 présente donc une hystérésis dont l'amplitude correspond à la valeur $\Delta F$ susmentionnée. Cette valeur est choisie de façon à assurer la stabilité de l'organe 18 en $x_1$ et en $x_2$ lorsque l'arbre d'entrée 10 subit de petites variations de vitesse, tout en assurant l'instabilité des positions intermédiaires entre $x_1$ et $x_2$.

Selon un mode de réalisation particulier de l'invention, le ressort agit sur l'organe mobile par l'intermédiaire d'un levier pivotant à bras de levier réglables permettant de modifier la raideur du ressort.

Selon une autre caractéristique de l'invention, des moyens sont prévus pour régler le tarage du ressort afin de modifier le seuil au-delà duquel l'organe de commande est actionné.

On décrira maintenant, à titre d'exemple non limitatif, un mode de réalisation particulier de l'invention en se référant à la figure 4 des dessins annexés, qui représente un dispositif de déclenchement à masselottes réalisé conformément aux enseignements de la présente invention.

Le dispositif de déclenchement à masselottes représenté sur la figure 4 comprend un boîtier 100 que traverse un arbre d'entrée 110 susceptible d'être entraîné en rotation par un système externe (non représenté) dont la vitesse de rotation doit servir à déclencher la mise en oeuvre d'un autre système (non représenté) au-delà d'un certain seuil de vitesse, ou dont la vitesse de rotation doit être contrôiés au moyen du dispositif selon l'invention.

L'arbre d'entrée 110 est monté tournant dans le boîtier 100 par l'intermédiaire d'un palier 102, et il porte à l'intérieur du boîtier un plateau 112 à la périphérie duquel sont articulées des masselottes 114 en forme de V dont les sommets sont articulés sur des axes 116 orientés tangentiellement par rapport au plateau 112. Chaque masselotte 114 comprend une tête 104 disposée sensiblement parallèlement à l'axe de l'arbre 110 et en éloignement du plateau 112, et une queue 106 qui s'étend sensiblement radialement vers l'axe de l'arbre 110 et coopère par un galet 108 avec une surface d'appui 109 définie sur un organe 118 coaxial à l'arbre 110. L'organe 118 est susceptible de coulisser parallèlement à son axe entre deux positions extrêmes $x_1$ et $x_2$ dans lesquelles l'extrémité de l'organe 118 opposée à la surface 109 est respectivement éloignée d'un système de commande tel qu'un interrupteur électrique 120, et en engagement avec celui-ci. L'interrupteur 120, porté par le boîtier 100, est susceptible d'être raccordé au système à commander pas des bornes électriques 121.

Entre l'extrémité de l'organe 118 opposés à la surface 109 et l'interrupteur 120 est disposée l'une des extrémités d'un levier 124 monté pivotant autour d'un axe 126 porté par un organe 128 fixé au boîtier 100. L'autre extrémité du levier 124 porte une coupelle 130 sur laquelle vient prendre appui un ressort de compression hélicoïdal 122 dont l'autre entrémité est en appui contre une autre coupelle 132 fixée au boîtier 100 par l'intermédiaire d'une tige filetée 134. Le levier 124 présente en outre une ouverture oblongue 136 dans laquelle est reçu l'axe 126, et l'organe 128 portant ce dernier est fixé au boîtier 100 par l'intermédiaire d'une vis 138 reçue dans uns boutonnière 140 parallèle au levier 124.

Le dispositif qui vient d'être décrit en se référant à la figure 4 est réalisé conformément à l'invention, c'est-à-dire que la raideur du système de masselottes 114 est positive, ce qui se concrétise sur la figure par le fait que l'angle $\Theta$ est inférieur à 100° quelle que soit la position occupée par l'organe 118, et que la raideur du ressort 122 est inferieure à la raideur du système de masselottes quelle que soit la position occupée par l'organe 118. Le fonctionnement du dispositif est donc conforme à la courbe de la figure 3 décrite précédemment, c'est-à-dire que le déplacement de l'organe 118 entre les positions extrêmes $x_1$ et $x_2$ est brutal, ce qui conduit à un déclenchement franc de l'interrupteur 120, et que ce dernier ne risque pas d'être ouvert et fermé plusieurs fois de suite en cas de petites fluctuations de la vitesse de rotation de l'arbre d'entrée 110.

En outre, le dispositif représenté sur la figure 4 permet à la fois de régler le seuil de déclenchement B' du système 120 et la valeur de l'hystérésis $\Delta F$. En effet, le tarage du ressort 122 peut être modifié en vissant plus ou moins la tige filetée 134 dans le boîtier 100, ce qui conduit à modifier le seuil de déclenchement B' du dispositif. De même, l'organe 128 portant l'axe de pivotement 126 du levier 124 peut être déplacé en desserrant la vis 138, ce qui permet modifier le rapport entre les bras du levier 124. Il est ainsi possible de modifier la pente de la force $F_R$ agissant sur l'organe 118 par l'intermédiaire du levier 124, ce qui permet de rapprocher plus ou moins la valeur de cette pente de la valeur de la pente de la force $F_M$ exercée par les masselottes 114 sur l'organe 118. Ce réglage permet donc de modifier la valeur de l'hystérésis $\Delta F$.

Bien entendu, l'invention n'est pas limitée au mode de réalisation qui vient d'être décrit à titre d'exemple, mais en couvre toutes les variantes. Ainsi, les perfectionnements décrits en se référant à la figure 4 et permettant de régler le seuil de déclenchement du dispositif et la valeur de l'hystérésis peuvent éventuellement être supprimés sans sortir du cadre de l'invention. Le dispositif se présente alors sous une forme sensiblement identique à celle des dispositifs antérieurs du type de celui qui a été décrit en se référant à la figure 1. La différence essentielle réside alors dans le choix des raideurs respectives du ressort et du système de masselottes. Par ailleurs, la forme et la disposition des différents éléments constituant le dispositif et notamment la forme des masselottes et de l'organe mobile ainsi que la disposition du ressort antagoniste peuvent subir toutes les variantes connues des diapositifs antérieurs. Enfin, les applications du dispositif selon l'invention peuvent être multiples, ce dispositif pouvant être utilisé notamment comme régulateur de vitesse ou pour commander toutes sortes d'asservissements. Il en résulte en particulier que l'interrupteur 120 peut être remplacé par tout autre système analogue présentant deux états stables, tel qu'un clapet hydraulique ou pneumatique.

**Revendications**

1. Dispositif de déclenchement à masselottes, dans lequel un arbre d'entrée (10; 110) entraîne en rotation les masselottes (14; 114) qui transforment la force centrifuge à laquelle elles sont soumises en un effort $F_M$ tendant à déplacer un organe mobile (18; 118) le long de l'axe du dispositif à l'encontre de la force $F_R$ exercée par un ressort de type spirale (22; 122), de façon à déclencher un système de commande (20; 120) lorsque la vitesse de rotation de l'arbre d'entrée (10; 110) dépasse un seuil prédétermine, la raideur des masselottes etant positive caractérisé en ce que la raideur du ressort (22; 122) est inférieure, en valeur absolue, à la raideur des masselottes (14; 114) dans la position occupée par l'organe mobile (18; 118) au voisinage du déclenchement du système de commande (20; 120).

2. Dispositif de déclenchement selon la revendication 1, caractérisé en ce que le ressort (122) agit sur l'organe mobile (118) par l'intermédiaire d'un levier pivotant (124) à bras de levier réglables permettant de modifier la raideur de l'action du ressort (122).

3. Dispositif de déclenchement selon l'une quelconque des revendications 1 ou 2, caractérisé en ce que des moyens (132, 134) sont prévus pour régler le tarage du ressort (122) afin de modifier le seuil au-delà duquel l'organe de commande (120) est actionné.

## Patentansprüche

1. Fliehgewichtauslösevorrichtung, bei welcher eine Antriebswelle (10, 110), die Fliehgewichte (14, 114) zur Drehung antreibt, welche die Fliehkraft, der sie aus gesetzt werden, in eine Kraft $F_M$ umwandeln, die das Bestreben hat, ein bewegliches Organ (18, 118) längs der Achse der Vorrichtung entgegen der Kraft $F_R$, die durch eine Spiralfeder (22, 122) ausgeübt wird, zu bewegen derart, daß ein Steuerungssystem (20, 120) ausgelöst wird, wenn die Drehzahl der Antriebswelle (10, 110) einen bestimmten Schwellenwert überschreitet bei positiver Steife der Fliehgewichte, dadurch gekennzeichnet, daß die Steife der Feder (22, 122) in ihrem absoluten Wert geringer ist als die Steife der Fliehgewichte (14, 114) in der von dem beweglichen Organ (18, 118) eingenommenen Stellung in der Nähe der Auslösung des Steuerungssystems (20, 120).

2. Vorrichtung nach Anspruch 1, dadurch gekennzeichnet, daß die Feder (122) auf das bewegliche Organ (118) mittels eines Schwenkhebels (124) mit regelbaren Hebelarmen wirkt, welche die Änderung der Steife der Wirkung der Feder (122) ermöglichen.

3. Vorrichtung nach einem der Ansprüche 1 oder 2, dadurch gekennzeichnet, daß Mittel (132, 134) zur Regelung der Tarierung der Feder (122) vorgesehen sind zur Veränderung des Schwellenwertes, oberhalb welchem das Steuerungsorgan (120) betätigt wird.

## Claims

1. Fly-weight unlatching device, in which an input shaft (10; 110) rotationally drives the fly-weights (14; 114) which convert the centrifugal force to which they are subjected into a force $F_M$ tending to displace a movable member (18; 118) along the axis of the device against the bias of the force $F_R$ exerted by a spring of helical type (22; 122), so as to actuate a control system (20; 120) when the rotary speed of the input shaft (10; 110) exceeds a predetermined threshold, the force exerted by the fly-weights being positive, characterised in this that the stiffness of the spring (22; 122) is less, in absolute value than the force exerted by the fly-weights (14; 114) in the position occupied by the movable member (18; 118) when adjacent the configuration in which the control system (20; 120) is actuated.

2. Unlatching device according to claim 1, characterised in this that the spring (122) acts on the movable member (118) through the intermediary of a pivotal lever (124) with adjustable lever arm enabling adjustment in the stiffness of the action of the spring (122).

3. Unlatching device according to one of claims 1 or 2, characterised in this that means (132, 134) are provided so as to control the adjustment of the spring (122) in order to modify the threshold above which the control member (120) is actuated.

FIG. 1

FIG. 4

FIG. 2

FIG. 3